# EUROPEAN PATENT SPECIFICATION

(11) **EP 3 988 325 B1**
(45) Date of publication and mention of the grant of the patent: **04.03.2026**
(21) Application number: 19933523.3
(22) Date of filing: 11.12.2019
(51) Int. Cl.: B60C 1/00, C08L 7/00, C08L 9/00, C08L 9/06, C08L 21/00

(54) **RUBBER COMPOSITION FOR SIDEWALL AND TIRE**
KAUTSCHUKZUSAMMENSETZUNG FÜR SEITENWAND UND REIFEN
COMPOSITION DE CAOUTCHOUC POUR FLANC ET PNEU

(30) Priority: 20.06.2019 JP 2019114837
(43) Date of publication of application: 27.04.2022
(73) Proprietor: BRIDGESTONE CORPORATION, Chuo-ku Tokyo 104-8340 (JP)
(72) Inventor: TAHARA, Seiichi, Tokyo 104-8340 (JP); KAWASHIMA, Keisuke, Tokyo 104-8340 (JP)
(74) Representative: Marks & Clerk LLP
(86) International application number: PCT/JP2019/048442
(87) International publication number: WO 2020/255451

(56) References cited:
- EP-A1- 2 424 740
- EP-A1- 3 222 440
- EP-A1- 3 279 011
- EP-B1- 2 424 740
- JP-A- 2008 031 427
- JP-A- 2008 056 733
- JP-A- 2009 155 631
- JP-A- 2019 111 892
- US-A1- 2008 097 024

## Description

### TECHNICAL FIELD

This disclosure relates to a rubber composition for sidewall and a tire.

### BACKGROUND

From the viewpoint of improving the low-fuel consumption properties of vehicles, there are known technologies for optimizing rubber compositions forming a sidewall portion (rubber composition for sidewall) of a tire.

For example, JP2010013553A (PTL 1) describes a technology of a rubber composition for sidewall, which obtains improved low heat generating properties (low tanδ) by adjusting rubber components and filler.

However, when the tanδ (tangent loss) of the rubber composition is kept low as in the rubber composition for sidewall described in PTL 1, there is a problem that the noise generated from tires as the vehicle passes (pass-by noise) deteriorates, although the rolling resistance and the low-fuel consumption properties can be improved.

Therefore, it has been desired to develop a rubber composition for sidewall of a tire, which has excellent low-rolling resistance properties and can also improve pass-by noise.

Further reference may be made to disclosures in PTL 2, PTL 3, PTL 4, PTL 5 and PTL 6 of rubber compositions for a sidewall of a pneumatic tire. PTL 7 discloses a rubber composition for a tread of a pneumatic tire.

### CITATION LIST

### Patent Literature

PTL 1: JP2010013553A
PTL 2: US 2008/097024 A1
PTL 3: EP 3 279 011 A1
PTL 4: EP 2 424 740 A1
PTL 5: JP 2009 155631 A
PTL 6: JP 2008 056733 A
PTL 7: EP 3 222 440 A1

### SUMMARY

### (Technical Problem)

It could thus be helpful to provide a rubber composition for sidewall which has excellent low-rolling resistance properties and can improve pass-by noise when applying the rubber composition for sidewall to a tire. It could also be helpful to provide a tire which has excellent low-rolling resistance properties and can improve pass-by noise.

### (Solution to Problem)

We thus provide the following.

The rubber composition for sidewall of the present disclosure is a rubber composition for a sidewall portion of a tire, wherein
the rubber components of the rubber composition comprise styrene-butadiene rubber having a styrene content of 30 mass% or more, natural rubber, and butadiene rubber, and the rubber composition further comprises carbon black of 25 parts by mass to 65 parts by mass with respect to 100 parts by mass of the rubber components, and
a ratio of tanδ at 0 °C (0 °C tanδ) to tanδ at 30 °C (30 °C tanδ) (0 °C tanδ/30 °C tanδ) is 2.00 or more, wherein the conditions during the measurement of the 0 °C tanδ and the 30 °C tanδ are initial strain of 2%, dynamic strain of 1% and frequency of 52 Hz.

By having the above configuration, it is possible to achieve low-rolling resistance properties and improvement in pass-by noise when applying the rubber composition for sidewall to a tire.

For the rubber composition for sidewall of the present disclosure, the 0 °C tanδ/30 °C tanδ is preferably 2.25 or more. This is because in this way, it is possible to achieve even better low-rolling resistance properties and further improvement in pass-by noise at the same time when applying the rubber composition for sidewall to a tire.

For the rubber composition for sidewall of the present disclosure, the 30 °C tanδ is preferably 0.140 or more. This is because in this way, it is possible to further improve the pass-by noise when applying the rubber composition for sidewall to a tire.

For the rubber composition for sidewall of the present disclosure, the 0 °C tanδ is preferably 0.200 or more. This is because in this way, it is possible to further improve the pass-by noise when applying the rubber composition for sidewall to a tire.

The rubber composition for sidewall of the present disclosure contains styrene-butadiene rubber having a styrene content of 30 mass% or more and preferably contains styrene-butadiene rubber having a styrene content of 40 mass% or more, as a rubber component. This is because in this way, it is possible to more reliably achieve low-rolling resistance properties and improvement in pass-by noise when applying the rubber composition for sidewall to a tire.

For the rubber composition for sidewall of the present disclosure, the rubber component further contains natural rubber. This is because in this way, it is possible to more reliably achieve low-rolling resistance properties and improvement in pass-by noise when applying the rubber composition for sidewall to a tire.

The rubber composition for sidewall of the present disclosure further contains butadiene rubber. This is because in this way, it is possible to more reliably achieve low-rolling resistance properties and improvement in pass-by noise when applying the rubber composition for sidewall to a tire.

For the rubber composition for sidewall of the present disclosure, the content of the styrene-butadiene rubber in the rubber component is preferably 1 mass% to 50 mass% and more preferably 1 mass% to 45 mass%. This is because in this way, it is possible to more reliably achieve low-rolling resistance properties and improvement in pass-by noise when applying the rubber composition for sidewall to a tire.

For the rubber composition for sidewall of the present disclosure, the rubber component preferably contains 10 mass% to 95 mass% of the natural rubber, 10 mass% to 90 mass% of the butadiene rubber, and 1 mass% to 45 mass% of the styrene-butadiene rubber. This is because in this way, it is possible to more reliably achieve low-rolling resistance properties and improvement in pass-by noise when applying the rubber composition for sidewall to a tire.

The tire of the present disclosure uses the rubber composition for sidewall of the present disclosure described above for a sidewall portion.

By having the above configuration, it is possible to achieve excellent low-rolling resistance properties and improvement in pass-by noise.

### (Advantageous Effect)

According to the present disclosure, it is possible to provide a rubber composition for sidewall which has excellent low-rolling resistance properties and can improve pass-by noise when applying the rubber composition for sidewall to a tire. Further, according to the present disclosure, it is possible to provide a tire which has excellent low-rolling resistance properties and can improve pass-by noise.

### DETAILED DESCRIPTION

The following describes the rubber composition for sidewall and the tire of the present disclosure in detail based on the embodiments thereof.

### <Rubber composition for sidewall>

The rubber composition for sidewall of the present disclosure is a rubber composition used for a sidewall portion of a tire.

The rubber composition for sidewall of the present disclosure has a ratio of tanδ at 0 °C (0 °C tanδ) to tanδ at 30 °C (30 °C tanδ) (0 °C tanδ/30 °C tanδ) of 2.00 or more.

Normally, when tanδ is reduced, the rolling resistance of a tire can be improved, but there is a problem that the pass-by noise level deteriorates. On the other hand, when tanδ is increased, the pass-by noise level can be suppressed, but there is a problem that the rolling resistance deteriorates.

Therefore, the present disclosure focuses on the frequency region of tanδ, which affects rolling resistance and pass-by noise. It has been found that the rolling resistance is improved by lowering low-frequency tanδ and that increasing high-frequency tanδ is preferable for improving the pass-by noise. Further, because it is difficult to measure high-frequency viscoelasticity due to the specifications of device, it is possible to improve the pass-by noise while obtaining excellent low-rolling resistance properties when the rubber composition is applied to a tire by increasing the ratio of tanδ at 0 °C to tanδ at 30 °C (specifically, by setting 0 °C tanδ/30 °C tanδ to 2.00 or more) according to temperature-frequency conversion.

In the rubber composition for sidewall of the present disclosure, the 0 °C tanδ/30 °C tanδ needs to be 2.00 or more. When the 0 °C tanδ/30 °C tanδ is less than 2.00, a sufficient frequency difference (temperature difference) cannot be obtained. As a result, when the rubber composition for sidewall is applied to a tire, low-rolling resistance properties and reduction of pass-by noise cannot be achieved at the same time.

From the same viewpoint, the 0 °C tanδ/30 °C tanδ is preferably 2.25 or more and more preferably 2.50 or more. If the 0 °C tanδ/30 °C tanδ is too large, the effect of reducing rolling resistance may not be sufficiently obtained. Therefore, the 0 °C tanδ/30 °C tanδ is preferably 6.00 or less.

Note that the 0 °C tanδ and the 30 °C tanδ in the present disclosure are 0 °C tanδ and 30 °C tanδ after the vulcanization of the rubber composition for sidewall of the present disclosure.

The method of measuring the 0 °C tanδ and the 30 °C tanδ is not particularly limited as long as it is a method that can accurately obtain the value of each tanδ, and a commonly used measuring instrument can be used. However, in the present disclosure, the 0 °C tanδ and the 30 °C tanδ can be measured using a spectrometer manufactured by Ueshima Seisakusho Co., Ltd.

Further, during the measurement of the 0 °C tanδ and the 30 °C tanδ, the conditions of initial strain, dynamic strain and frequency may be, for example, initial strain of 2 %, dynamic strain of 1 %, and frequency of 10 Hz.

The 30 °C tanδ of the rubber composition for sidewall of the present disclosure is not particularly limited as long as the above-mentioned relationship of 0 °C tanδ/30 °C tanδ can be satisfied. However, from the viewpoint of achieving even better low-rolling resistance properties and further improvement in pass-by noise at the same time when applying the rubber composition for sidewall to a tire, it is preferably 0.140 to 0.340 and more preferably 0.140 to 0.300. When the 30 °C tanδ is 0.140 or more, the pass-by noise can be further improved. When the 30 °C tanδ is 0.340 or less, the rolling resistance can be further improved.

Further, the 0 °C tanδ of the rubber composition for sidewall of the present disclosure is not particularly limited as long as the above-mentioned relationship of 0 °C tanδ/30 °C tanδ can be satisfied. However, from the viewpoint of achieving even better low-rolling resistance properties and further improvement in pass-by noise at the same time when applying the rubber composition for sidewall to a tire, it is preferably 0.200 to 0.700, more preferably 0.280 to 0.600, and still more preferably 0.280 to 0.550. When the 0 °C tanδ is 0.200 or more, the pass-by noise can be further improved. When the 0 °C tanδ is 0.700 or less, the rolling resistance can be further improved.

The method for adjusting the value of 0 °C tanδ/30 °C tanδ is not particularly limited, and examples thereof include optimizing the constituent components of the rubber composition for sidewall of the present disclosure. For example, it is possible to set the value of 0 °C tanδ/30 °C tanδ within the range of the present disclosure by limiting the type and content of rubber component or adjusting the type and content of filler, which will be described later.

The components constituting the rubber composition for sidewall of the present disclosure are not particularly limited as long as they can satisfy the above-mentioned relationship of 0 °C tanδ/30 °C tanδ.

The type and content of rubber component and filler can be appropriately adjusted according to the performance required for the sidewall portion.

The rubber component of the rubber composition for sidewall of the present disclosure is not particularly limited. However, from the viewpoints of satisfying the above-mentioned relationship of 0 °C tanδ/30 °C tanδ and being able to achieve even better low-rolling resistance properties and further improvement in pass-by noise at the same time when applying the rubber composition for sidewall to a tire, it contains styrene-butadiene rubber (SBR) having a styrene content of 30 mass% or more.

From the same viewpoint, the styrene content of the SBR is preferably 40 mass% or more and more preferably 42 mass% or more.

The styrene content of the SBR can be determined from the integration ratio of ¹H-NMR spectrum.

Further, from the viewpoint of being able to achieve even better low-rolling resistance properties and further improvement in pass-by noise at the same time when applying the rubber composition for sidewall to a tire, the content of the styrene-butadiene rubber in the rubber component is preferably 1 mass% to 50 mass%, more preferably 5 mass% to 45 mass%, and still more preferably 10 mass% to 40 mass%. When the content of the styrene-butadiene rubber in the rubber component is 1 mass% or more and 50 mass% or less, it is easy to satisfy the above-mentioned relationship of 0 °C tanδ/30 °C tanδ, and it is possible to achieve even better low-rolling resistance properties and further improvement in pass-by noise at the same time when applying the rubber composition for sidewall to a tire.

The rubber components further contain natural rubber (NR) in addition to the SBR. In this case, it is easy to satisfy the above-mentioned relationship of 0 °C tanδ/30 °C tanδ, and it is possible to achieve even better low-rolling resistance properties and further improvement in pass-by noise at the same time when applying the rubber composition for sidewall to a tire.

Further, the rubber components further contain butadiene rubber (BR) in addition to the SBR. In this case, it is easy to satisfy the above-mentioned relationship of 0 °C tanδ/30 °C tanδ, and it is possible to achieve even better low-rolling resistance properties and further improvement in pass-by noise at the same time when applying the rubber composition for sidewall to a tire.

Furthermore, from the viewpoint of more reliably achieving both low-rolling resistance properties and improvement in pass-by noise when applying the rubber composition for sidewall to a tire, the rubber components preferably contain 10 mass% to 89 mass% of the natural rubber, 10 mass% to 89 mass% of the butadiene rubber, and 1 mass% to 50 mass% of the styrene-butadiene rubber.

The SBR, the NR, and the BR may be unmodified or modified.

The rubber components may also contain rubber other than the above-mentioned SBR, NR and BR (other rubber component), depending on the required performance. Examples of the other rubber component include diene-based rubber such as isoprene rubber (IR), styrene isoprene butadiene rubber (SIBR), chloroprene rubber (CR) and acrylonitrile butadiene rubber (NBR), and non-diene-based rubber such as ethylene propylene diene rubber (EPDM), ethylene propylene rubber (EPM) and butyl rubber (IIR).

Further, the presence/absence, content, type and the like of filler contained in the rubber composition for sidewall of the present disclosure are not particularly limited and can be appropriately changed according to the required performance.

For example, in addition to the carbon black, silica, other inorganic filler, and the like may be contained as the filler.

The type of the carbon black is not particularly limited and can be appropriately selected according to the required performance. Examples of the carbon black include those of FEF, SRF, HAF, ISAF, and SAF grades.

The content of the carbon black contained in the rubber composition for sidewall of the present disclosure is 25 parts by mass to 65 parts by mass and preferably 30 parts by mass to 45 parts by mass with respect to 100 parts by mass of the rubber components. When the content of the carbon black is 25 parts by mass or more with respect to 100 parts by mass of the rubber components, even better reinforcing properties and crack resistance can be obtained. When the content of the carbon black is 65 parts by mass or less with respect to 100 parts by mass of the rubber components, the deterioration of low heat generating properties can be suppressed.

Examples of the type of the silica include wet silica, colloidal silica, calcium silicate, and aluminum silicate.

Among the above, the silica is preferably wet silica and more preferably precipitated silica. These silicas have high dispersibility, which can reduce the rolling resistance of a tire. The precipitated silica refers to silica obtained as a result of aggregating primary particles by, in an early stage of production, allowing a reaction solution to react in a relatively high temperature and in a neutral to alkaline pH range to make silica primary particles grow, and then controlling the pH range to acidic side.

The containing of the silica is optional in the present disclosure. However, when silica is contained, the content of the silica is preferably 1 part by mass to 60 parts by mass with respect to 100 parts by mass of the rubber component. When the content of the silica is 1 part by mass or more with respect to 100 parts by mass of the rubber components, the reinforcing properties can be further improved. When the content of the silica is 60 parts by mass or less with respect to 100 parts by mass of the rubber components, deterioration of processability can be suppressed.

Examples of the other inorganic filler include alumina (Al₂O₃) such as γ-alumina and α-alumina, alumina hydrate (Al₂O₃·H₂O) such as boehmite and diaspore, aluminum hydroxide [Al(OH)₃] such as gibbsite and bayerite, aluminum carbonate [Al₂(CO₃)₃], magnesium hydroxide [Mg(OH)₂], magnesium oxide (MgO), magnesium carbonate (MgCO₃), talc (3MgO·4SiO₂· H₂O), attapulgite (5MgO·8SiO₂·9H₂O), titanium white (TiO₂), titanium black (TiO₂ₙ₋₁), calcium oxide (CaO), calcium hydroxide [Ca(OH)₂], aluminum magnesium oxide (MgO·Al₂O₃), clay (Al₂O₃·2SiO₂), kaolin (Al₂O₃·2SiO₂·2H₂O), pyrophyllite (Al₂O₃·4SiO₂·H₂O), bentonite (Al₂O₃·4SiO₂·2H₂O), aluminum silicate (Al₂SiO₅, Al₄·3SiO₄·5H₂O, etc.), magnesium silicate (Mg₂SiO₄, MgSiO₃, etc.), calcium silicate (Ca₂SiO₄, etc.), aluminum calcium silicate (Al₂O₃·CaO·2SiO₂, etc.), calcium magnesium silicate (CaMgSiO₄), calcium carbonate (CaCO₃), zirconium oxide (ZrO₂), zirconium hydroxide [ZrO(OH)₂·nH₂O], zirconium carbonate [Zr(CO₃)₂], various zeolites, and other crystalline aluminosilicates containing hydrogen, alkali metals or alkaline earth metals that correct the charge.

The rubber composition of the present disclosure may also contain a resin.

Examples of the resin include C5-based resin, C5/C9-based resin, C9-based resin, phenol resin, terpene-based resin, and terpene-aromatic compound-based resin. These resins may be used alone or in combination of two or more.

The rubber composition for sidewall of the present disclosure may contain other components in addition to the above-mentioned rubber components and filler as long as the effect of the present disclosure is not impaired.

Examples of the other components include additives commonly used in the rubber industry such as a silane coupling agent, a softener, stearic acid, an age resistor, a vulcanizing agent (sulfur), a vulcanization accelerator, and a vulcanization acceleration aid, which can be contained as appropriate.

When the rubber composition for sidewall of the present disclosure contains silica as the filler, it is preferable to further contain a silane coupling agent. This is because the effects of reinforcing properties and low heat generation properties by silica can be further improved in this way. A known silane coupling agent may be appropriately used.

A known age resistor may be used as the age resistor, which is not particularly limited. Examples thereof include a phenol-based age resistor, an imidazole-based age resistor, and an amine-based age resistor. These age resistors may be used alone or in combination of two or more.

A known vulcanization accelerator may be used as the vulcanization accelerator, which is not particularly limited. Examples thereof include thiazole-based vulcanization accelerators such as 2-mercaptobenzothiazole, dibenzothiazyl disulfide, di-2-benzothiazolyl disulfide; sulfenamide-based vulcanization accelerators such as N-cyclohexyl-2-benzothiazylsulfenamide and N-t-butyl-2-benzothiazylsulfenamide; guanidine-based vulcanization accelerators such as diphenylguanidine (1,3-diphenylguanidine, etc.); thiuram-based vulcanization accelerators such as tetramethyl thiuram disulfide, tetraethyl thiuram disulfide, tetrabutyl thiuram disulfide, tetradodecyl thiuram disulfide, tetraoctyl thiuram disulfide, tetrabenzyl thiuram disulfide, and dipentamethylene thiuram tetrasulfide; dithiocarbamate-based vulcanization accelerators such as zinc dimethyldithiocarbamate; and zinc dialkyldithiophosphate.

Examples of the vulcanization acceleration aid include zinc oxide (ZnO) and fatty acid. The fatty acid may be saturated or unsaturated, linear or branched, and the number of carbon atoms of the fatty acid is not particularly limited. Examples thereof include fatty acids having 1 to 30 carbon atoms and preferably fatty acids having 15 to 30 carbon atoms, more specifically, naphthenic acid such as cyclohexane acid (cyclohexanecarboxylic acid) and alkylcyclopentane with side chains; saturated fatty acids such as hexanoic acid, octanoic acid, decanoic acid (including branched carboxylic acids such as neodecanoic acid), dodecanoic acid, tetradecanoic acid, hexadecanoic acid, and octadecanoic acid (stearic acid); unsaturated fatty acids such as methacrylic acid, oleic acid, linoleic acid and linolenic acid; and resin acids such as rosin, tall oil acid and abietic acid. These may be used alone or in combination of two or more. In the present disclosure, zinc oxide and stearic acid can be preferably used.

### <Tire>

The tire of the present disclosure uses the rubber composition for sidewall of the present disclosure described above in a sidewall portion.

By using the rubber composition for sidewall of the present disclosure in a sidewall portion, it is possible to improve the low-rolling resistance properties and improve the pass-by noise.

The tire of the present disclosure is preferably a pneumatic tire. The gas to be filled in the pneumatic tire may be normal air or air whose oxygen partial pressure has been adjusted, and an inert gas such as nitrogen, argon and helium.

The tire of the present disclosure can be used as a tire for various vehicles, and it is preferably used as a tire for passenger vehicles or a tire for trucks and buses. This is because both the reduction of rolling resistance and the improvement in pass-by noise can be achieved more effectively in this way.

### EXAMPLES

The following describes the present disclosure in more detail with reference to Examples. Note that the present disclosure is not limited to the following Examples.

### <Example 1 and Comparative Example 1>

Rubber compositions for sidewall A and B were prepared using a normal Banbury mixer according to the formulation listed in Table 1. The blending amount of each component listed in Table 1 is an amount (parts by mass) with respect to 100 parts by mass of the rubber components.

The obtained rubber compositions for sidewall A and B were subjected to vulcanization at 160 °C for 15 minutes, and the loss tangent (tanδ) at 0 °C and 30 °C of the obtained vulcanized rubber were measured under conditions of initial strain of 2 %, dynamic strain of 1 % and frequency of 52 Hz using a spectrometer manufactured by Ueshima Seisakusho Co., Ltd. Table 2 lists the measured tanδ at 0 °C and 30 °C and the calculated 0 °C tanδ/30 °C tanδ.

**[Table 1]**

| Composition for sidewall | A | B |
|---|---|---|
| Natural rubber | 40 | 40 |
| Butadiene rubber *1 | 60 | 40 |
| Styrene-butadiene rubber *2 | - | 20(26.8) |
| Carbon black *3 | 35 | 35 |
| Resin *4 | - | 6 |
| Oil *5 | 5 | - |
| Zinc oxide *6 | 3 | 3 |
| Wax *7 | 2 | 2 |
| Age resistor 1 *8 | 1 | 2 |
| Age resistor 2 *9 | 3 | 3 |
| Vulcanization accelerator 1 *10 | 0.6 | 0.5 |
| Vulcanization accelerator 2 *11 | - | 0.3 |
| Sulfur | 2 | 2 |

| | | |
|---|---|---|
| *1 Equivalent to "BR01" manufactured by JSR Corporation *2 "T0150" manufactured by JSR Corporation, styrene content: 46 mass%, the values in parentheses in Table 1 are the blending amount (parts by mass) as oil extended rubber containing extender oil *3 "Asahi # 65" manufactured by Asahi Carbon Co., Ltd. *4 "Quinton G100" manufactured by Zeon Corporation *5 "A/O MIX" manufactured by JXTG Nippon Oil & Energy Corporation *6 "Zinc oxide type 2" manufactured by MITSUI KINZOKU KOGYO *7 "OZOACE 0355" manufactured by Nippon Seiro Co., Ltd. *8 2,2,4-trimethyl-1,2-dihydroquinoline polymer, "NOCRAC 224" manufactured by Ouchi Shinko Chemical Industrial Co., Ltd. *9 N-(1,3-dimethylbutyl)-N'-phenyl-p-phenylenediamine, "NOCRAC 6C" manufactured by Ouchi Shinko Chemical Industrial Co., Ltd. *10 N-cyclohexyl-2-benzothiazolyl sulfenamide, "NOCCELER^{®} CZ-G" (NOCCELER is a registered trademark in Japan, other countries, or both) manufactured by Ouchi Shinko Chemical Industrial Co., Ltd. *11 Di-2-benzothiazolyl disulfide, "NOCCELER^{®} DM-P" manufactured by Ouchi Shinko Chemical Industrial Co., Ltd. | | |

Then, each of the obtained rubber composition for sidewall was used for a sidewall portion to prepare a sample of a pneumatic radial tire for passenger vehicles having a size of 205/55R16. All the samples were prepared under the same conditions except for the type of rubber used for the sidewall portion.

### <Evaluation>

The obtained rubber compositions for sidewall and tire samples were evaluated with the following methods. The results are listed in Table 2.

### (1) Rolling resistance

The rolling resistance coefficient (RRC) of each sample tire was measured in accordance with the international standard (ECE R117).

The evaluation was indicated in an index obtained by taking the reciprocal of the measured RRC, with the reciprocal of the RRC of Comparative Example 1 being 100. The larger the index value is, the better the low-rolling resistance properties are. The evaluation results are listed in Table 2.

### (2) Pass-by noise level

The pass-by noise (dB) of each sample tire was measured in accordance with the international standard (ECE R117).

For the evaluation, the difference in level between the noise (dB) of each sample and the pass-by noise (dB) of Comparative Example 1 was calculated and taken as the pass-by noise level. The smaller the pass-by noise level is, the more the pass-by noise is reduced. The evaluation results are listed in Table 2.

**[Table 2]**

| | | Comparative Example 1 | Example 1 |
|---|---|---|---|
| Sidewall portion conditions | Composition for sidewall | A | B |
| | 0 °C tanδ | 0.169 | 0.394 |
| | 30 °C tanδ | 0.134 | 0.157 |
| | 0 °C tanδ/30 °C tanδ | 1.26 | 2.51 |
| Evaluation | Rolling resistance (the larger, the better) | 100 | 100 |
| | Pass-by noise level (the smaller, the better) | Standard | -0.3 dB |

From the results in Table 2, it was found that the sample of Example 1 had well-balanced and excellent effects in terms of low-rolling resistance properties and pass-by noise level, as compared with the sample of Comparative Example 1.

In addition, the sample of Comparative Example 1 had inferior result in terms of pass-by noise as compared with the sample of Example 1.

### INDUSTRIAL APPLICABILITY

According to the present disclosure, it is possible to provide a rubber composition for sidewall which has excellent low-rolling resistance properties and can improve pass-by noise when applying the rubber composition for sidewall to a tire. Further, according to the present disclosure, it is possible to provide a tire which has excellent low-rolling resistance properties and can improve pass-by noise.

## Claims

1. A rubber composition for a sidewall portion of a tire, wherein
the rubber components of the rubber composition comprise styrene-butadiene rubber having a styrene content of 30 mass% or more, natural rubber, and butadiene rubber, and the rubber composition further comprises carbon black of 25 parts by mass to 65 parts by mass with respect to 100 parts by mass of the rubber components, and
a ratio of tanδ at 0 °C, which is expressed as 0 °C tanδ, to tanδ at 30 °C, which is expressed as 30 °C tanδ, is 2.00 or more, where the ratio is expressed as 0 °C tanδ/30 °C tanδ, wherein the conditions during the measurement of the 0 °C tanδ and the 30 °C tanδ are initial strain of 2%, dynamic strain of 1% and frequency of 52 Hz.

2. The rubber composition for sidewall according to claim 1, wherein the 0 °C tanδ/30 °C tanδ is 2.25 or more.

3. The rubber composition for sidewall according to claim 1 or 2, wherein the 30 °C tanδ is 0.140 or more.

4. The rubber composition for sidewall according to any one of claims 1 to 3, wherein the 0 °C tanδ is 0.200 or more.

5. The rubber composition for sidewall according to any one of claims 1 to 4, wherein the styrene content of the styrene-butadiene rubber is 40 mass% or more.

6. The rubber composition for sidewall according to any one of claims 1 to 5, wherein a content of the styrene-butadiene rubber in the rubber component is 1 mass% to 50 mass%.

7. The rubber composition for sidewall according to claim 6, wherein the content of the styrene-butadiene rubber in the rubber component is 1 mass% to 45 mass%.

8. The rubber composition for sidewall according to claim 7, wherein the rubber component comprises 10 mass% to 89 mass% of the natural rubber, 10 mass% to 89 mass% of the butadiene rubber, and 1 mass% to 45 mass% of the styrene-butadiene rubber.

9. A tire using the rubber composition for sidewall according to any one of claims 1 to 8 for a sidewall portion.

## Patentansprüche

1. Kautschukzusammensetzung für einen Seitenwandabschnitt eines Reifens, wobei
die Kautschukkomponenten der Kautschukzusammensetzung Styrol-Butadien-Kautschuk, der einen Styrolgehalt von 30 Masse-% oder mehr aufweist, Naturkautschuk und Butadien-Kautschuk umfassen und wobei die Kautschukzusammensetzung weiter Ruß in einer Menge von 25 bis 65 Masseteilen bezogen auf 100 Masseteile der Kautschukkomponenten umfasst, und
das Verhältnis von tanδ bei 0 °C, ausgedrückt als 0 °C tanδ, zu tanδ bei 30 °C, ausgedrückt als 30 °C tanδ, 2,00 oder mehr beträgt, wobei das Verhältnis als 0 °C tanδ / 30 °C tanδ ausgedrückt wird, wobei die Bedingungen während der Messung von 0 °C tanδ und 30 °C tanδ eine Anfangsdehnung von 2%, eine dynamische Dehnung von 1% und eine Frequenz von 52 Hz sind.

2. Seitenwandkautschukzusammensetzung nach Anspruch 1, wobei 0 °C tanδ / 30 °C tanδ 2,25 oder mehr beträgt.

3. Seitenwandkautschukzusammensetzung nach Anspruch 1 oder 2, wobei der 30 °C tanδ-Wert 0,140 oder mehr beträgt.

4. Seitenwandkautschukzusammensetzung nach einem der Ansprüche 1 bis 3, wobei der 0 °C tanδ-Wert 0,200 oder mehr beträgt.

5. Seitenwandkautschukzusammensetzung nach einem der Ansprüche 1 bis 4, wobei der Styrolgehalt des Styrol-Butadien-Kautschuks 40 Masse-% oder mehr beträgt.

6. Seitenwandkautschukzusammensetzung nach einem der Ansprüche 1 bis 5, wobei der Gehalt an Styrol-Butadien-Kautschuk in der Kautschukkomponente 1 Masse-% bis 50 Masse-% beträgt.

7. Seitenwandkautschukzusammensetzung nach Anspruch 6, wobei der Gehalt an Styrol-Butadien-Kautschuk in der Kautschukkomponente 1 Masse-% bis 45 Masse-% beträgt.

8. Seitenwandkautschukzusammensetzung nach Anspruch 7, wobei die Kautschukkomponente 10 Masse-% bis 89 Masse-% Naturkautschuk, 10 Masse-% bis 89 Masse-% Butadien-Kautschuk und 1 Masse-% bis 45 Masse-% Styrol-Butadien-Kautschuk umfasst.

9. Reifen, bei dem die Seitenwandkautschukzusammensetzung nach einem der Ansprüche 1 bis 8 für einen Seitenwandabschnitt verwendet wird.

## Revendications

1. Composition de caoutchouc pour une partie de flanc d'un pneumatique, dans laquelle
les composants de caoutchouc de la composition de caoutchouc comprennent du caoutchouc styrène-butadiène présentant une teneur en styrène de 30 % en masse ou plus, du caoutchouc naturel et du caoutchouc butadiène, et la composition de caoutchouc comprend en outre du noir de carbone pour 25 à 65 parties en masse par rapport à 100 parties en masse des composants de caoutchouc, et
un rapport de tanδ à 0 °C, noté 0 °C tanδ, à tanδ à 30 °C, noté 30 °C tanδ, est supérieur ou égal à 2, le rapport étant exprimé sous la forme 0 °C tanδ/30 °C tanδ, dans laquelle les conditions lors de la mesure de 0 °C tanδ et 30 °C tanδ sont une déformation initiale de 2 %, une déformation dynamique de 1% et une fréquence de 52 Hz.

2. Composition de caoutchouc pour flanc selon la revendication 1, dans laquelle le 0 °C tanδ/30 °C tanδ est de 2,25 ou plus.

3. Composition de caoutchouc pour flanc selon la revendication 1 ou 2, dans laquelle le 30 °C tanδ est de 0,140 ou plus.

4. Composition de caoutchouc pour flanc selon l'une quelconque des revendications 1 à 3, dans laquelle le 0 °C tanδ est de 0,200 ou plus.

5. Composition de caoutchouc pour flanc selon l'une quelconque des revendications 1 à 4, dans laquelle la teneur en styrène du caoutchouc styrène-butadiène est de 40 % en masse ou plus.

6. Composition de caoutchouc pour flanc selon l'une quelconque des revendications 1 à 5, dans laquelle une teneur du caoutchouc styrène-butadiène dans le composant de caoutchouc est de 1 % en masse à 50 % en masse.

7. Composition de caoutchouc pour flanc selon la revendication 6, dans laquelle la teneur du caoutchouc styrène-butadiène dans le composant de caoutchouc est de 1 % en masse à 45 % en masse.

8. Composition de caoutchouc pour flanc selon la revendication 7, dans laquelle le composant de caoutchouc comprend de 10 % en masse à 89 % en masse du caoutchouc naturel, de 10 % en masse à 89 % en masse du caoutchouc butadiène et de 1 % en masse à 45 % en masse de caoutchouc styrène-butadiène.

9. Pneumatique utilisant la composition de caoutchouc pour flanc selon l'une quelconque des revendications 1 à 8 pour une partie de flanc.
